# EUROPÄISCHE PATENTANMELDUNG

(11) **EP 1 011 220 A2**
(43) Veröffentlichungstag der Anmeldung: **21.06.2000**
(21) Anmeldenummer: 99125104.2
(22) Anmeldetag: 16.12.1999
(51) Int. Cl.: H04J 3/07, H04J 3/16

(54) **Verfahren zum Übertragen eines digitalen Breitbandsignals durch Aufteilen in mehere virtuell verkettete Signale**

(30) Priorität: 16.12.1998 DE 19858149
(71) Anmelder: SIEMENS AKTIENGESELLSCHAFT, 80333 München (DE)
(72) Erfinder: Müller, Horst, 82069 Hohenschäftlarn (DE)

(57) **Zusammenfassung**

Sendeseitig werden Pointeroperationen als Folge von negativen oder positiven Stopfoperationen beim Einfügen eines verketteten Breitbandsignals in Untersystemeinheiten (TU-12) erzeugt, die dazu führen, daß in den Netzelementen eines synchronen Netzes angeordnete Hysteresespeicher (PS1, PS2, ) eine minimale Laufzeit aufweisen.

## Beschreibung

Die Erfindung betrifft ein Verfahren zur Übertragung eines digitalen Breitbandsignals nach dem Oberbegriff des Patentanspruchs 1.

Für die Übertragung von digitalen Breitbandsignalen, deren Übertragungsbitrate nicht in einer Multiplexhierarchie festgelegt ist, ist das Prinzip der virtuellen Verkettung von mehreren Untersystemeinheiten/Untersystemeinheitengruppen bekannt. Hierbei handelt es sich um festgelegte Übertragungspulsrahmen zur Übertragung des aufgeteilten Breitbandsignals.

Ein solches Verfahren ist in dem Patent EP 0 429 888 B1 beschrieben. Die virtuelle Verkettung von TU-2 Signalen ist in der ITU-Empfehlung G709 unter Punkt 8.3.6.2 festgelegt und für AU-4 Signale in der Diskussion.

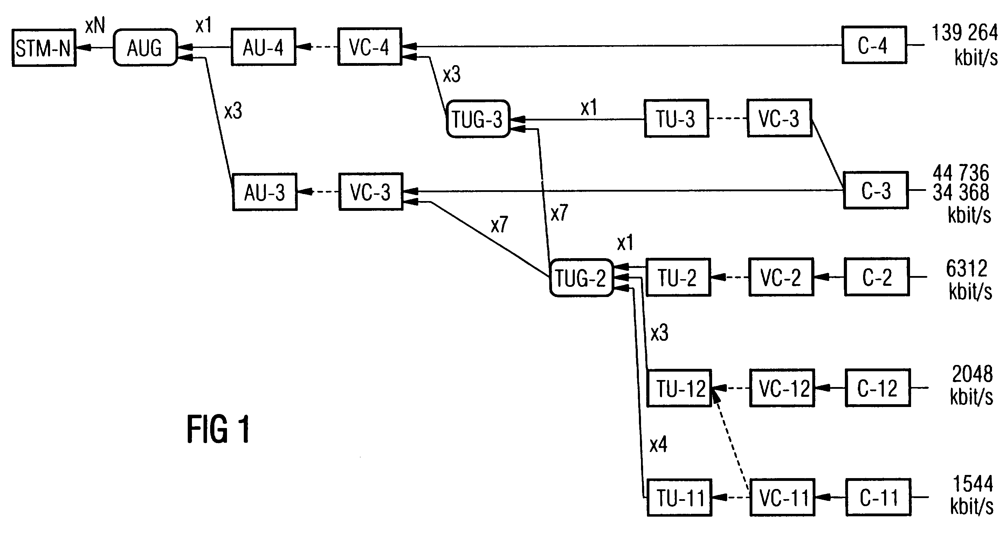

Zunächst soll zum besseren Verständnis der logische Aufbau der Synchron-Hierarchie anhand Figur 1 kurz erläutert werden. Datensignale mit unterschiedlichen Datenraten werden zunächst in Container C eingefügt, die - in mit Zusatzinfornmation versehene virtuelle Container VC und Untersystemeinheiten TU umgesetzt - wieder in Untersystemeinheitengruppen TUG höherer Ordnung eingefügt werden und in einem sogenannten Transportmodul STM-N ausgesendet werden. Die Anfangsbytes der verschiedenen virtuellen Container werden durch Pointer angegeben, die an bekannten Stellen der Pulsrahmen angeordnet sind.

Durch die virtuelle Verkettung wird die Übertragungskapazität des Systems insbesondere bei der Übertragung von nicht hierarchischen Breitbandsignalen ökonomisch genutzt. So kann beispielsweise ein 10 MBit/s-Signal (LAN, Ethernet) mittels virtueller Verkettung von fünf 2 Mbit/s-Signalen in fünf Untersystemeinheiten TU-12 übertragen werden. Bei einer konventionellen Übertragungstechnik müßte dieses Signal in höheren Einheiten TU-3 eingefügt werden, die eine Übertragung mit 34 MBit/s gestatten, von denen 24 MBit/s dann ungenutzt bleiben. In der SDH bestehen Direktübertragungsmöglichkeiten für 2 MBit/s, 6 MBit/s, 34 MBit/s und 140 MBit/s-Signalen; in den USA können in entsprechenden Untersystemeinheiten 1,5 MBit/s, 6 MBit/s, 45 MBit/s und 140 MBit/s übertragen werden.

Die Verkettung kann nicht nur zwischen Signalen bzw. Untersystemeinheiten der gleichen Datenrate bzw Übertragungskapazität erfolgen, sondern es können auch unterschiedliche Datenraten aufweisende Untersystemeinheiten miteinander verkettet werden.

Das virtuelle Verkettungsprinzip sieht vor, daß sendeseitig beim Zusammenfassen der Untersystemeinheiten für jedes Teilsignal der gleiche Pointerwert eingesetzt wird. Bei der Übertragung der Teilsignale innerhalb eines STM-N-Signals kann es aber trotzdem vorkommen, daß die einzelnen Teilsignale geringfügig unterschiedliche Laufzeiten aufweisen, da sie beispielsweise eine individuelle Behandlung in Cross-Connect-Einrichtungen erfahren. Diese Laufzeitunterschiede können, wie in dem eingangs genannten Patent beschrieben, jedoch durch kleine Laufzeitspeicher wieder ausgeglichen werden.

Bei der Übertragung von verketteten Signalen können sich die Füllgrade der den einzelnen Signalen bzw. Übertragungskanälen zugeordneten Hysteresespeicher extrem voneinander unterscheiden und hierdurch weitere erhebliche Laufzeitunterschiede verursachen. Eine richtige Zuordnung und Zusammenführung der verketteten Signale ist jedoch nur möglich, wenn die Laufzeitunterschiede für verkettete Signale kleiner sind als ein halber relevanter Übertragungspulsrahmen, d.h. für verkettete AU-3/TU-3-Signale und AU-4-Signale kleiner als ein halber STM-1-Rahmen und für verkettete TU-2 und TU-11/TU-12-Signale kleiner als ein halber STM-1-Überrahmen sind, der aus 4 Übertragungspulsrahmen STM-1 gebildet wird. Nur dann ist gewährleistet, daß durch die Pointerwerte die Pulsrahmen richtig zugeordnet werden können und damit die Teilsignale wieder richtig zu einem Breitbandsignal zusammengefügt werden.

Auch wenn man zusätzliche Maßnahmen zur Bildung größerer Überrahmen ergreift, können die Laufzeitunterschiede zwischen den einzelnen Teilsignalen aufgrund von unterschiedlichen Füllständen der Hysteresespeicher so groß werden, daß auch dann Fehler auftreten.

Aufgabe der Erfindung ist es daher, ein Verfahren zur Übertragung von verketteten Signalen anzugeben, das trotz vorhandener Hysterese-Speicher fehlerfrei arbeitet.

Diese Aufgabe wird durch das im Patentanspruch 1 angegebene Verfahren gelöst.

Vorteilhafte Weiterbildungen der Erfindung sind in den Unteransprüchen angegeben.

Besonders vorteilhaft ist es, daß aufgrund von erzwungenen Pointeroperationen die Laufzeitspeicher sämtlicher in einem synchronen Netz (SDH-Netz) von den verketteten Signalen (STM-N) durchlaufenen Netzelemente wie beispielsweise Cross-connect-Einrichtungen oder Add-Drop-Multiplexer entleert werden. Ein weiterer Eingriff in das Übertragungssystem ist dann nicht erforderlich. Die Pointeroperationen werden sehr einfach durch die Verwendung eines Eingabetaktsignals mit größerer Frequenzabweichung erzielt. Hierdurch ergibt sich eine minimale Gesamtlaufzeit für die Signale durch das gesamte Netz.

Ein Ausführungsbeispiel der Erfindung wird anhand von Figuren näher beschrieben.

Es zeigen:
- Figur 1: den prinzipiellen logischen Aufbau der Synchron-Hierarchie,
- Figur 2: eine von mehreren möglichen Zusammensetzungen des Pulsrahmens STM-1,

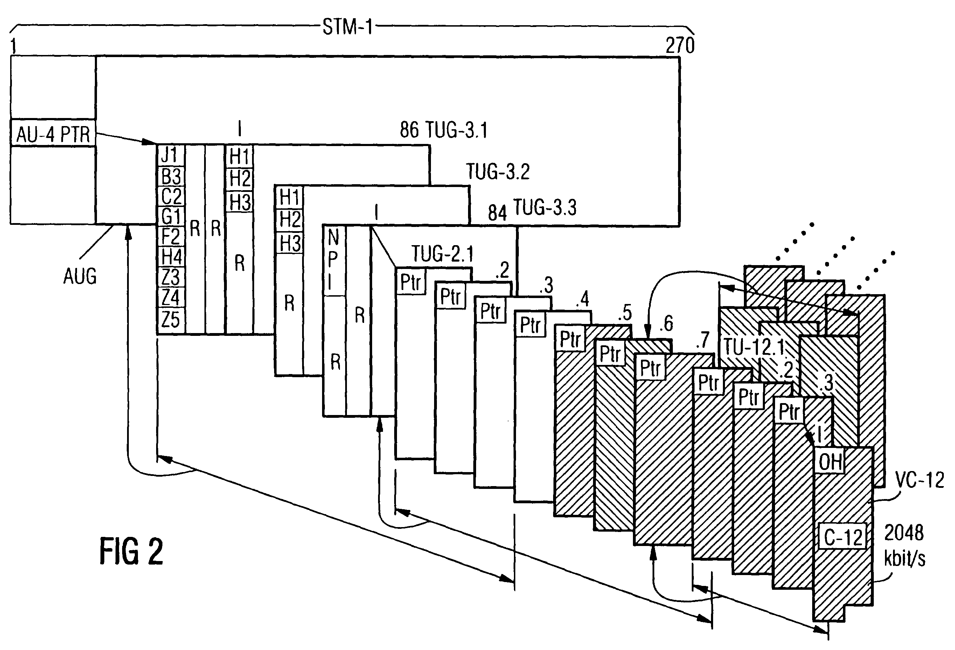

- Figur 2: ein Prinzipschaltbild einer Sendeeinrichtung,

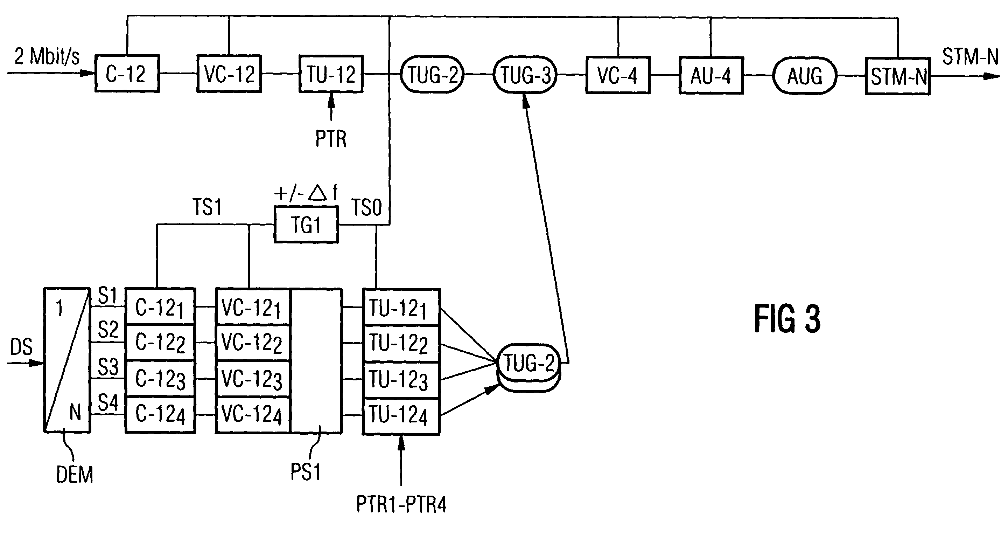

- Figur 3: ein Prinzipschaltbild einer Empfangseinrichtung und

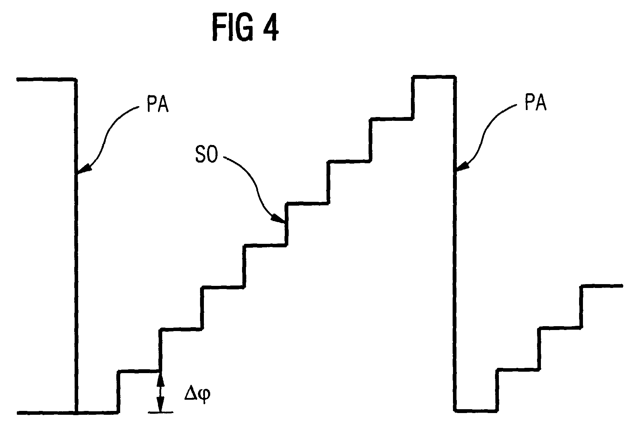

- Figur 4: ein Prinzipschaltbild des Empfangsteils mit Jitter-Reduzierung.

Auf den prinzipiellen Aufbau der Synchron-Hierarchie gemäß **Figur 1** wurde bereits eingegangen.

In einem Ausführungsbeispiel soll ein Breitbandsignal DS mit einer Übertragungsbitrate von 8 MBit/s über verkettete Signale übertragen werden. Entsprechend Figur 1 kann die Übertragung mit Hilfe von 4 TU-12 Einheiten mit einer Übertragungskapazität von jeweils 2,304 Mbit/s erfolgen

Anhand von **Figur 2 und Figur 3** soll das Vorgehen näher erläutert werden. Das Breitbandsignal DS wird in einem Demultiplexer 1 (Figur 3) in 4 Teilsignale S1 bis S4 aufgeteilt, die in Container C-12₁ bis C-12₄ eingefügt werden. In Figur 2 ist nur einer dieser Container dargestellt. Diese Container werden mit einem Path Overhead OH versehen und dann als Virtuelle Container VC-12₁ - VC-12₄ bezeichnet. Die Pulsrahmen der Container werden von einem Eingabetaktsignal TS1 gebildet, das von einem ersten Taktgenerator TG1 erzeugt wird, dessen Frequenz um den Betrag ±Δf von dem Systemtaktsignal TS0 abweicht. Unterschiede in der Datenrate der Teilsignale und der Übertragungskapazität der Container werden durch bitweises Stopfen ausgeglichen. Die virtuellen Container werden jeweils in eine Tributary Unit TU-12 bis TU-12₄ übernommen. Die Pointer der jeweiligen Tributary Units TU-12₁ bis TU-12₄ sind an bekannten Stellen des Pulsrahmens VC-4 angeordnet und deuten auf die Anfangsbytes der jeweiligen virtuellen Container VC-12₁ bis VC-12₄. Diese Tributary Units sind in Figur 2 gestrichelt dargestellt. Sie werden beispielsweise in zwei verschiedene Tributary Unit Groups TUG-2 eingefügt und über verschiedene Zwischenstufen in ein Transportmodul STM-N eingefügt ("eingemappt"). Die Pointer werden für jede verkettete TU-12 auf den selben Wert gesetzt, um später eine richtige Zuordnung zu ermöglichen. Aufgrund der Frequenzunterschiede zwischen den Taktsignalen T1 und T0 kommt es zu weiteren mit Pointer-Action PA bezeichneten byteweisen Stopfvorgängen. Als Tributary Units oder Tributary Unit Groups werden hier alle verketteten "Übertragungspulsrahmen" bezeichnet.

In **Figur 4** sind die Zusammenhänge zwischen bitweisen Stopfoperationen und byteweisem Stopfen durch Pointer Operationen PA (Pointer-Action) dargestellt. Geht man davon aus, daß keine Frequenzabweichung zwischen dem Teilsignal und dem Systemtaktsignal TS0 besteht, dann kommt es Aufgrund der Frequenzabweichung des Eingabetaktsignals TS1 zu regelmäßigen bitweisen Stopfoperationen SO, die jeweils eine Phasenänderung von Δϕ oder einem Bit bewirken. Nach jeweils acht dieser Stopfoperationen haben sich die Impulsrahmen zwischen den Containern VC-12 und den Tributary Units um ein Byte verschoben und es erfolgt die Anpassung der Tributary Units TU-12 durch das Verschieben der Pointer-Adresse (Pointer-Action). Dieser Vorgang wiederholt sich periodisch.

Ist die Frequenz des Eingabetaktsignals TS1 schneller, so muß auch die Übertragung der Tributary Units TU-12 beschleunigt werden. Ein hardwaremäßig realisierter erster Pufferspeicher PS1, in dem die virtuellen Container VC-12 eingeschrieben werden, wird deshalb schneller ausgelesen werden und bald seinen minimalen Füllstand erreicht haben. Die prinzipielle Darstellung in **Figur 3** zeigt, daß in einem oberen Verarbeitungszweig außer den verketteten Teilsignalen noch weitere 2 Mbit/s Signale in das Transportmodul eingefügt werden. Das Netzwerkmanagement sorgt dafür, daß die verketteten Signale im selben Transportmodul übertragen werden.

Die durch die Frequenzdifferenz der Taktsignale verursachten byteweisen Stopfvorgänge führen bei allen innerhalb des SDH-Netzes angeordneten Pufferspeichern (Hysteresespeichern) - beispielsweise in Cross-connect-Einrichtungen oder Add-Drop-Multiplexern ebenfalls zu einer Änderung des Speicherinhalts, hier zu dessen Verminderung.

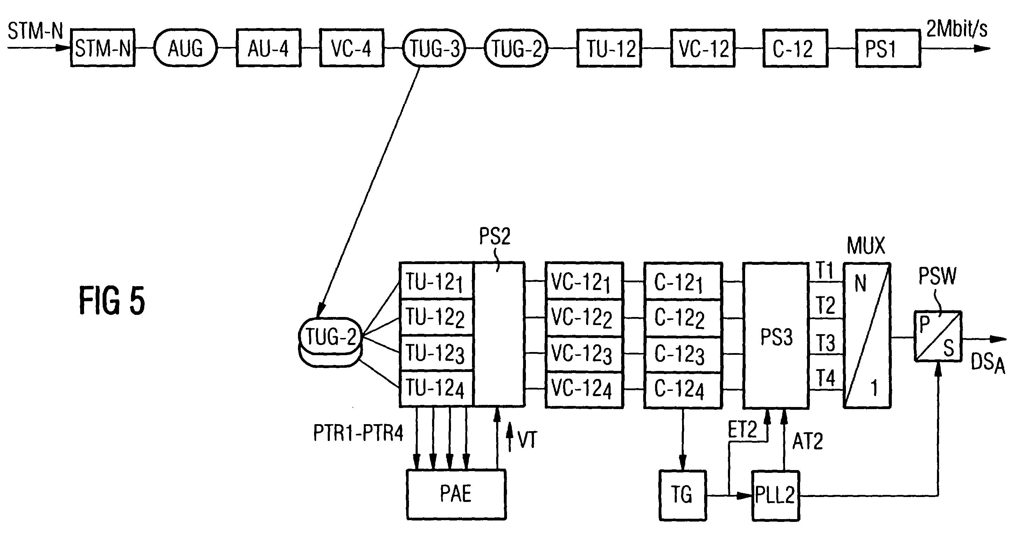

In **Figur 5** ist eine Empfangseinrichtung dargestellt. Die verketteten Signale TU-12₁ bis TU-12₄ werden aus dem Empfangssignal STM-N separiert und in einen zweiten Pufferspeicher PS2 eingeschrieben. Für die Auswahl der richtigen Tributary Units sorgt das Netzwerkmanagement. Die Auswertung der Pointer erfolgt in einer Pointer-Auswerteeinheit PAE. Diese steuert den zweiten als Laufzeitspeicher eingesetzten Pufferspeicher PS2 mit Hilfe eines verketteten Taktsignals VT derart, daß die Daten in der richtigen Reihenfolge ausgelesen werden. Die virtuellen Container werden vom Path Overhead befreit in Container C-12₁ bis C-12₄ umgesetzt, die in einen weiteren Pufferspeicher PS3 mit einem in einer Taktgewinnung TG erzeugten Einschreibtaktsignal ET2 eingeschrieben werden. Aus diesem Speicher werden die Daten der Teilsignale mit Hilfe eines in einem Phasenregelkreises PLL2 gewonnenen weitgehend regelmäßigen Ausgabetaktes AT2 byteweise ausgelesen. Ein Phasenregelkreis ist ausreichend, da in allen verketteten Signalen sendeseitig die gleichen Stopfoperationen vorgenommen wurden. In einem Multiplexer MUX werden die Datenbytes zum ursprünglichen Breitbandsignal DS zusammengesetzt. Dieses Signal kann in einem Parallel-Seriell-Umsetzer PSW wieder in eine serielle Form DS_{A} umgesetzt werden.

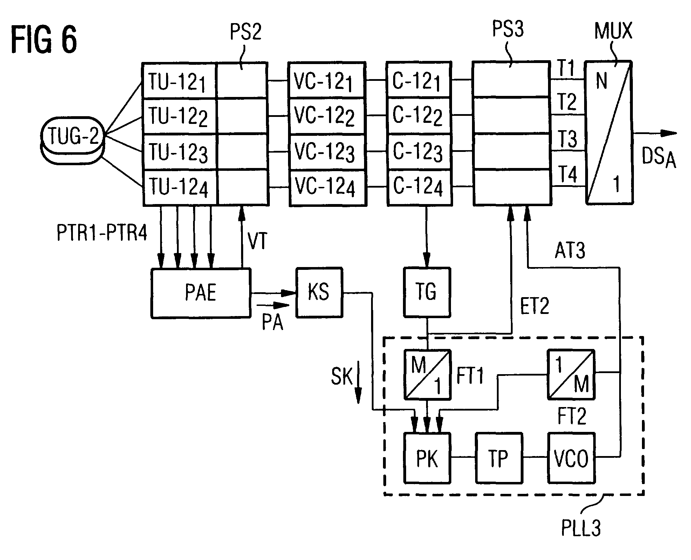

In **Figur 6** ist der Empfangsteil für die verketteten Signale mit einer speziell ausgebildeten Phasenregelschleife KS, PK, TP, VCO, FT1, FT2, TG3 dargestellt. Diese enthält einen verbesserten Phasenregelkreis, der die willkürlich verursachten regelmäßigen Stopfvorgänge kompensiert. Es wird zunächst angenommen, daß das Breitbandsignal DS und das Systemtaktsignal TSO keine Abweichung voneinander haben und die Stopfvorgänge nur durch die Frequenzabweichung zwischen dem Systemtaktsignal und dem Eingabetaktsignal verursacht wurden.

Während diese Stopfvorgänge durch eine herkömmliche Phasenregeischleife nicht vollständig ausgeglichen werden, sondern erheblich zum Jitter des Ausgangssignals beitragen, können diese systematischen Stopfvorgänge durch die Erzeugung eines Korrektursignals kompensiert werden.
Von der Pointer-Auswerteeinrichtung PAE wird jede Pointeroperation PA einen Kompensationssignal-Erzeuger KS zugeführt, der diese in ein binäres oder analoges Korrektursignal SK umsetzt, das dem in Figur 4 dargestelltem Signal entspricht. Das Korrektursignal wird einem Phasenkomperator PK zugeführt und hebt so die von der Taktgewinnung TG3 gelieferten systematischen Stopfvorgänge auf. Der Phasenregelkreis Pll3 gleicht daher nur die zusätzlichen Pointeroperationen aus, die bei einer Übertragung durch das SDH-Netz auftreten können.

## Patentansprüche

1. Verfahren zur Übertragung eines digitalen Breitbandsignals (DS) in einem synchronen Netz, bei dem sendeseitig das Breitbandsignal (DS) in mehrere Teilsignale (S1 bis S4) zerlegt wird, die in Container (C-12₁ bis C-12₄, VC-12₁ bis VC-12₄) eingefügt werden, wobei die Taktanpassung durch bitweises Stopfen erfolgt, bei dem die Container (C-12₁ bis C-12₄, VC-12₁ bis VC-12₄) zwischengespeichert werden und in eine Untersystemeinheitenkette aus mehreren Untersystemeinheiten (TU-11, TU-12, TU-2) oder Untersystemeinheitengruppen (TUG-2, TUG-3) eingefügt werden, die den selben Pointerwert aufweisen, und anschließend in einen Transportmodul (STM-N) eingefügt und ausgesendet werden sowie empfangsseitige wieder zu dem Breitbandsignal (DS) zusammengefügt werden,
**dadurch gekennzeichnet**,
daß die Container (C-2, C-11, C-12, C-3, C-4, VC-2, VC-11, VC-12, VC-3, VC-4) durch ein vom Systemtaktsignal (TS) frequenzmäßig abweichendes Eingabetaktsignal (TS1) gebildet werden, so daß aufgrund der Frequenzunterschiede Stopfvorgänge und als deren Folge Pointer-Operationen ausgelöst werden, die dazu führen, daß eine minimale oder maximale Anzahl von Daten in Hysteresespeichern (PS1, PS2, ...) von Netzelementen zwischengespeichert werden.

2. Verfahren nach Anspruch 1,
**dadurch gekennzeichnet**,
daß die Frequenzabweichung zwischen Eingabetaktsignal (TS1) und Systemtaktsignal (TS0) größer ist als die zwischen verschiedenen Netzelementen zulässige Taktabweichung.

3. Verfahren nach Anspruch 2,
**dadurch gekennzeichnet**,
daß die Frequenzabweichung größer als 4,6 ppm ist.

4. Verfahren nach einem der vorhergehenden Ansprüche,
**dadurch gekennzeichnet**,
daß die Frequenz des Eingabetaktsignals (TS1) höher ist, als die des Systemtaktsignals (TS0), so daß die durch Hysteresespeicher (PS1, PS2, ...) bedingten Laufzeiten durch positive Pointeroperationen minimiert werden.

5. Verfahren nach einem der vorhergehenden Ansprüche,
**dadurch gekennzeichnet**,
daß empfangsseitig zur Erzeugung eines möglichst jitterfreien Ausgangs-Breitbandsignals (DS_{A}) eine gemeinsame Phasenregelung in einem Phasenregelkreis (PLL2) für die verketteten Untersystemeinheiten (C-12₁ bis C-12₄) oder Untersystemeinheitengruppen (TUG-2, TUG-3) vorgesehen ist.

6. Verfahren nach Anspruch 5,
**dadurch gekennzeichnet**,
daß empfangsseitig zur Beseitigung des sendeseitig absichtlich durch Pointeroperationen verursachten Jitters ein entsprechendes Kompensationssignal (SK) aus der Pointer-Stopfinformation erzeugt wird, die dem Phasenkomperator (PK) des Phasenregelkreises (PLL3) zugeführt wird.
